# EUROPEAN PATENT SPECIFICATION

(11) **EP 4 584 902 B1**
(45) Date of publication and mention of the grant of the patent: **18.11.2026**
(21) Application number: 23758682.1
(22) Date of filing: 29.08.2023
(51) Int. Cl.: H04B 10/112, H04B 10/114, H04B 10/116

(54) **A SUBSYSTEM FOR OPTICAL WIRELESS COMMUNICATION**
SUBSYSTEM FÜR OPTISCHE DRAHTLOSE KOMMUNIKATION
SOUS-SYSTÈME POUR COMMUNICATION SANS FIL OPTIQUE

(30) Priority: 08.09.2022 EP 22194647
(43) Date of publication of application: 16.07.2025
(73) Proprietor: Signify Holding B.V., 5656 AE Eindhoven (NL)
(72) Inventor: GERME, Michel, 5656 AE Eindhoven (NL); SIMON, Philippe, Henri, André, 5656 AE Eindhoven (NL); JORDAN, Christian, 5656 AE Eindhoven (NL)
(74) Representative: Verweij, Petronella Daniëlle
(86) International application number: PCT/EP2023/073582
(87) International publication number: WO 2024/052154

(56) References cited:
- EP-A1- 3 300 264
- US-A1- 2002 131 123
- US-A1- 2018 157 001

## Description

### FIELD OF THE INVENTION

The invention relates to the field of optical wireless communication, such as Li-Fi communication. More particularly, various apparatus and systems are disclosed herein related to an efficient deployment of optical wireless communication with access to multiple external networks.

### BACKGROUND OF THE INVENTION

To enable more and more electronic devices like laptops, tablets, and smartphones to connect wirelessly to the Internet, wireless communication confronts unprecedented requirements on data rates and link qualities, and such requirements keep on growing year over year, considering the emerging digital revolution related to Internet-of-Things (IoT). Radio frequency technology like Wi-Fi has limited spectrum capacity to embrace this revolution.

In the meanwhile, optical wireless communication (OWC) is drawing more and more attention with its intrinsic security enhancement and capability to support higher data rates over the available bandwidth in visible light, Ultraviolet (UV), and Infrared (IR) spectra. Depending for example on the wavelengths used, such techniques may also be referred to as coded light, Light Fidelity (LiFi), visible light communication (VLC) or free-space optical communication (FSO). OWC or Li-Fi is directional and shielded by light blocking materials, which provides it with the potential to deploy a larger number of access points, as compared to Wi-Fi, in a dense area of users by spatially reusing the same bandwidth. These key advantages over wireless radio frequency communication make OWC or Li-Fi a promising secure solution to mitigate the pressure on the crowded radio spectrum for IoT applications and indoor wireless access. Other possible benefits of Li-Fi may include guaranteed bandwidth for a certain user, and the ability to function safely in areas otherwise susceptible to electromagnetic interference. Therefore, Li-Fi is a very promising technology to enable the next generation of immersive connectivity.

There are also scenarios where multiple networks need to be deployed in the same area to satisfy different application requirements. For example, when there are two external networks to be deployed, two optical access points (APs) may be required to provide end users with the last few meters of connectivity. The two optical APs may interfere with each other if there is overlap between the wavelengths used by the two APs and/or if they transmit at the same time.

One way to enable the coexistence of two wireless optical networks in the same area without interference is to apply separate wavelengths per network. However, this solution presents few constraints and drawbacks:
- limitation on the number of "off the shelf" wavelengths in the IR spectrum: only few LEDs can propose a reasonable high power to guarantee large coverage (i.e., 850 nm and 940 nm);
- need for IR filters (low-pass, high-pass, or band-pass) to be placed in front of photoreceivers, to provide sufficient attenuation of unwanted wavelengths, and these IR filters are expensive;
- Performance degradation versus temperature: LEDs typically present a peak wavelength shift versus temperature (i.e., 25 nm wavelength shift over Delta Temperature of 70⁰C), which result in optical received power loss because of fixed cut-off frequency of IR filters.

Another way to enable the coexistence of two wireless optical networks in the same area without interference is to apply a channel access control method of Time Division Multiple Access (TDMA). Some baseband modules used for optical wireless communication have controllable timeslots. For example, by synchronizing baseband modules, it is possible to schedule the emission from multiple neighboring optical APs by allowing only one optical AP to emit at a time.

US2018157001A1 is related to optical bridges for providing communications between an exterior network and a residential network.

US2002131123A1 is related to free space optical communication network for building to building communication.

EP3300264A1 is related to a repeater system for RF communication, and the backhaul network may be based on optical communication.

### SUMMARY OF THE INVENTION

To provide connectivity to multiple external networks in the same area, more than one optical APs will be required by using off-the-shelf components. As explained above, coexistence of the multiple optical APs in the same area may be solved by using TDMA scheduling among the multiple optical APs. However, this solution remains complex and bulky because it implies to install one full Access Point for each external network.

In view of the above, the present disclosure is directed to apparatus and systems for providing an efficient solution for deploying an optical wireless communication system comprising a single optical front end (OFE) that provides end devices with connectivity to multiple external networks. More particularly, the goal of this invention is achieved by a subsystem as claimed in claim 1.

In accordance with a first aspect of the invention a subsystem is provided. A subsystem configured to be part of an optical access point for connecting an end device to a first network or a second network via optical wireless communication; wherein the first network and the second network are of different security and/or priority levels, the subsystem comprising a first communication interface configured to provide connection to the first network; a second communication interface configured to provide connection to the second network; an optical front end, OFE, comprising a light source configured to emit optical data to the end device and a light detector configured to receive optical data from the end device for optical wireless communication with the end device; a combiner, connected between the light source and the first and the second communication interfaces, configured to combine analog signals received from both the first and the second communication interfaces and to provide the combined analog signals to the light source for transmission; and a splitter, connected between the light detector and the first and the second communication interfaces, configured to split analog signals received from the light detector and to provide the analog signals to either the first communication interface or the second communication interface.

The subsystem is used to provide connectivity to multiple external networks, such as the first network and the second network. The external networks may be either wired networks or wireless networks. It may also be that one of the external networks is a wired network, and another one of the external networks is a wireless network. A wired network may be an Ethernet. The wireless network may be based on a millimeter wave communication system, or a 5G cellular network.

The optical wireless communication may be carried out in visible light, Ultraviolet (UV), and Infrared (IR) spectra. Thus, the optical wireless communication may also be called a Li-Fi communication or a Visible Light Communication (VLC). Most of optical wireless communications use Infrared or near Infrared spectrum which is comprised between 780nm and 2500nm. To deploy multiple optical wireless communication systems for different networks in a same area, interferences can be reduced by choosing different wavelengths per communication system.

An optical front end (OFE) may comprise at least a light source for optical data transmission and a light detector for optical data reception. For transmission, the OFE is used to convert an electrical transmitting signal to an output optical signal via the light source. For reception, the OFE is used to convert a received optical signal to an output electrical signal via the light sensor for further signal processing. The light source or light emitter may be one of a light-emitting diode (LED), a laser diode, a vertical-cavity surface-emitting laser (VCSEL), or an Edge Emitting Laser Diode (EELD). Preferably, the light source comprises at least one of a LED and a VCSEL. The light detector, also called photo detector or photo sensor, is a photodiode, which may be a PIN diode, an Avalanche Photo Diode (APD), or a photomultiplier.

By sharing the same OFE among the first and second communication interfaces, there is no additional measures needed for interference avoidance between the optical wireless communication for the two external networks towards end users in the coverage area. It also makes the subsystem more cost-effective with reduced hardware components.

Note that, the subsystem is not limited to providing end users with connectivity to two different networks. The same subsystem architecture may be extended for providing end users with connectivity to more than two different networks by reusing the same OFE.

It may be possible to share the same OFE among the two or more network interfaces with a pass-through option. And then the conflict between the data flow from the different networks will depend on the actual traffic load. If both networks are of very low traffic load, the conflict rate may be still low. However, it may be more efficient to share the single OFE in a coordinated manner.

Preferably, the subsystem configured to use the OFE for connecting to either the first network or the second network on a time-sharing basis.

Beneficially, some optical wireless communication protocols support medium access control with controllable time slots. For example, in a system with time division multiple access (TDMA), one medium access control (MAC) frame/cycle is divided into multiple time slots. By assigning each time slot to a single network interface, the two network interfaces may use the single OFE without interfering each other.

Beneficially, the subsystem configured to set a time schedule on using the OFE for connecting to either the first network or the second network according to the different security levels and/or priority levels.

A network with a higher security level and/or priority level may have the opportunity to use the single OFE for a longer period of time, such that the traffic with that network is served with priority by the subsystem.

In one option, the subsystem configured to set the time schedule by further taking predetermined traffic loads on using the first network and the second network into account.

The predetermined traffic load may be a configurable parameter or historical data based on an earlier use of the system. And then, the time schedule is determined according to the priority and/or security levels of each individual network and in combination of the predetermined traffic load information.

The time schedule may also be determined dynamically or adaptively, such that a real time traffic load or a user request can be used as a further factor.

Advantageously, the first and the second communication interfaces respectively comprise a first baseband module and a second baseband module, wherein the first baseband module is configured to carry out bidirectional data conversion between baseband signals of the first network and baseband signals suitable for the OFE, and the second baseband module is configured to carry out bidirectional data conversion between baseband signals of the second network and baseband signals suitable for the OFE.

Each of the two communication interfaces comprises a dedicated baseband module to implement the bidirectional data conversion between an individual external network and the optical wireless communication system. Thus, depending on the communication protocol used by an individual external network, a different baseband module may be adopted.

Beneficially, the baseband signals suitable for the OFE are modulated according to Orthogonal Frequency-Division Multiplexing, OFDM, or On-Off Keying, OOK.

OFDM is widely used as a digital multi-carrier modulation method in many communication systems, because it has a great advantage of robustness against severe channel conditions, such as narrowband interference or frequency selective fading. By splitting the entire band into a plurality of subcarriers, the system also has the flexibility to apply different modulation and coding schemes to individual subcarriers, which may be used to maximize the capacity of the channel. For optical wireless communication, unipolar OFDM modulation techniques are typically employed, such as ACO-OFDM, DCO-OFDM, ADO-OFDM and/or Flip OFDM.

With OOK encoding, the optical light is pulsed on or off during each bit time. Each "1" bit is encoded into an optical pulse and each "0" bit is encoded into an off period. Therefore, the maximum bit rate to be supported is directly related to the speed at which the light source can be switched on and off. Typically, lasers and LEDs can be switched at rates up to hundreds of megahertz, and an OOK modulation represents a simple procedure for producing relatively high bit rates. Even higher data rates, such as gigabit rates, can be approached by interlacing OOK bit streams from several different lasers.

In a preferred setup, the subsystem further comprises a reference clock configured to synchronize the baseband modules of the first and the second communication interfaces.

When the baseband modules support slotted MAC protocol, it is beneficial to synchronize the two or more baseband modules with a reference clock, and then to apply the time scheduling on using the single OFE.

Advantageously, the first and the second communication interfaces respectively further comprise a first analog front end, AFE, module and a second AFE module; wherein the first AFE module is configured to carry out bidirectional conversion between digital signals to/from the first baseband module and analog signals to the combiner or from the splitter, and the second AFE module is configured to carry out bidirectional conversion between digital signals to/from the second baseband module and analog signals to the combiner or from the splitter.

In one example, at least one out of the first network and the second network is a wired network.

As aforementioned, the two or more external networks may be of the same type or different types. Preferably, at least one out of the first network and the second network is a wired network. And even more preferably, the wired network is an Ethernet.

In one example, the subsystem is comprised in a single housing.

For example, the subsystem may be deployed as a standalone optical access point (AP) on the ceiling. The subsystem may also be deployed as a part of another electronic device, such as a luminaire, in a single housing.

In one setup, the subsystem is assembled in a pole, and the OFE is placed on one side of the pole.

The pole comprises multiple baseband modules each corresponding to a different network. the multiple baseband modules are all connected to the single OFE. It is beneficial to deploy the single OFE at one end of a pole, such as the top of the pole. The pole or rod may be used as an access point (AP) inside a room or a tent and be placed on a table or another furniture to improve the coverage area of the AP.

Similarly, the subsystem may also be used to construct a LiFi end point (EP) pole composing multiple basebands and all connected to a single OFE. A horizontal OWC link may be established between the LiFi AP pole and the LiFi EP pole, such that devices connected to the LiFi EP pole may access to different networks.

Beneficially, the optical wireless communication is according to a Li-Fi standard.

As a derivative of optical wireless communication, Li-Fi provides high data rate communication over the available bandwidth in visible light, Ultraviolet (UV), and Infrared (IR) spectra. There are different standardization activities related to Li-Fi communication. ITU G.9991 standard for indoor Visible Light Communication (VLC) is one of the earliest standard for high-speed wireless communications with visible light and infrared. IEEE has formed IEEE 802.11bb Task Force to develop and ratify the Global standard for Li-Fi.

### BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the invention.
FIG. 1 shows a block diagram of a basic setup of the subsystem;
FIG. 2 shows a block diagram of another basic setup of the subsystem;
FIG. 3 illustrates time scheduling of two networks sharing one OFE in the subsystem;
FIG. 4 demonstrates an example of implementing the subsystem;
FIG. 5 demonstrates another example of implementing the subsystem;
FIG. 6 illustrates an example implementation of a subsystem in a single housing, and
FIG. 7 illustrates an example implementation of a subsystem in a distributed manner.

### DETAILED DESCRIPTION OF EMBODIMENTS

The embodiments set forth below represent information to enable those skilled in the art to practice the embodiments. Upon reading the following description in light of the accompanying drawings, those skilled in the art will understand the concepts of the disclosure and will recognize applications of these concepts not particularly addressed herein. It should be understood that these concepts and applications fall within the scope of the disclosure.

In certain application scenarios, end devices in the same area may need to access different external networks, which may have different domains, security levels, and/or priority levels. Example use cases include scenarios where accessibility needs to be provided for both public and private networks in the same area, such as hotels, public sectors, and enterprises. Other applications include military and defense, such as providing accessibility to multiple networks with different security levels. To provide connectivity to these multiple external networks in the same area, more than one optical AP will be required by using off-the-shelf components to build up the system, with each individual optical AP connecting to a different external network. Interference avoidance among the multiple APs may be handled by using wavelength multiplexing or TDMA. However, these conventional interference avoidance techniques have certain limitations and disadvantages, such that they add extra complexity and overhead to the system. For example, to coordinate, either according to wavelength multiplexing or TDMA, the multiple co-located APs with each connecting to a different external network, a controller may be required to schedule and allocate the wavelength or time resource. Furthermore, the multiple co-located APs need to be synchronized to have such scheduling of the controller to take effect.

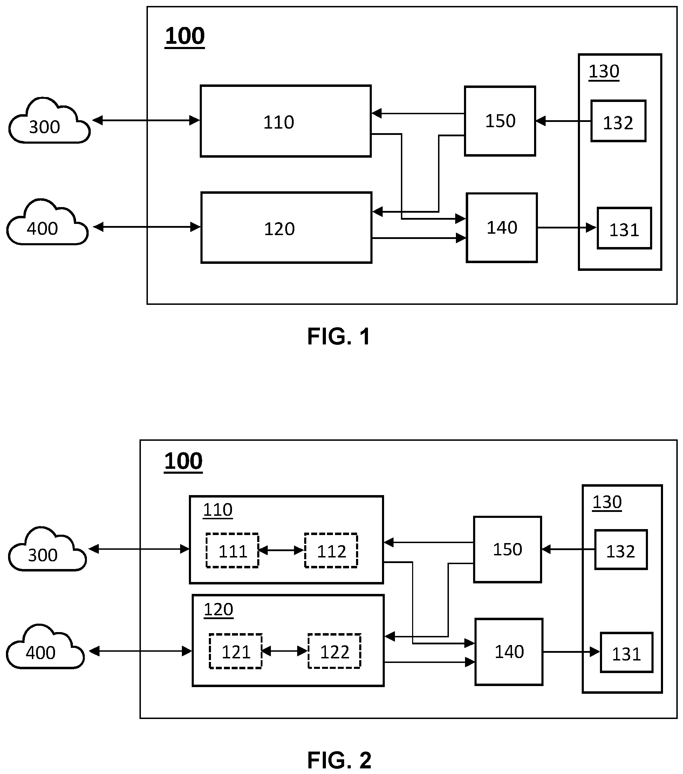

To solve the problem, a subsystem is disclosed in the present invention, which comprises a single optical front end (OFE) for interfacing between end devices and multiple external networks. FIG. 1 shows a block diagram of a basic setup of the subsystem 100. The subsystem 100 is used for connecting an end device to multiple external networks, such as a first network 300 or a second network 400 via optical wireless communication. The multiple external networks, such as the first network 300 and the second network 400, are of different domains with different security and/or priority levels, which may be either a wired network or a wireless network.

As an example, in a use case of inside tents of command posts, soldiers will have access to different networks at the same time, such as NATO secret and NATO restricted. Moreover, there are two key parameters on battlefield: installation time, which should be as short as possible; and weight saving for military material that shall be carried by planes and/or trucks. For these reasons, a solution using one single optical transceiver to transfer data from multiple networks is a key advantage, as it reduces cabling, weight, and installation time.

As a basic setup, the subsystem 100 comprises a first communication interface 110, a second communication interface 120, an optical front end (OFE) 130, a combiner 140, and a splitter 150. The first communication interface 110 is configured to provide connection to the first network 300, such that it provides bi-direction signal conversion between the first network 300 and the optical wireless communication network. Similarly, the second communication interface 120 is configured to provide bi-direction signal conversion between the second network 400 and the optical wireless communication network. An optical front end is used to implement the conversion between electrical signals and optical signals. The OFE 130 comprises at least a light source 131 for optical data transmission and a light detector 132 for optical data reception. In a transmitter chain, the OFE is used to convert an electrical transmitting signal to an output optical signal via the light source. In a receiver chain, the OFE is used to convert a received optical signal to an output electrical signal via the light sensor for further signal processing. The light source or light emitter may be one of a light-emitting diode (LED), a laser diode, a vertical-cavity surface-emitting laser (VCSEL), or an Edge Emitting Laser Diode (EELD). Preferably, the light source comprises at least one of a LED and a VCSEL. The light detector, also called photo detector or photo sensor, is a photodiode, which may be a PIN diode, an Avalanche Photo Diode (APD), or a photomultiplier.

The combiner 140, connected between the light source 131 and the first and the second communication interfaces, is configured to combine analog signals received from both the first and the second communication interfaces and to provide to the light source 131 for transmission. The splitter 150, connected between the light detector 132 and the first and the second communication interfaces, is configured to split analog signals received from the light detector 132 and to provide to either the first communication interface 110 or the second communication interface 120.

Therefore, the first and the second communication interfaces 110, 120, the combiner 140 and the OFE 130 form the transmitter chain for the optical wireless communication. The OFE 130, the splitter 150, and the first and the second communication interfaces 110, 120, form the receiver chain for the optical wireless communication. The OFE 130, the combiner 140, and the splitter 150 are the shared parts in the subsystem for providing connectivity to different external networks. Note that, the subsystem is not limited to providing end devices with connectivity to two different networks. The same subsystem architecture may be extended for providing end devices with connectivity to more than two different networks by reusing the shared parts of OFE 130, combiner 140, and splitter 150, and adding a further communication interface in addition to the first and second communication interfaces 110, 120. In practice, the same OFE 130 may be used to provide access to three, four or even more external networks to end devices.

The shared OFE 130 may be used to connect end devices to either the first network 300 or the second network 400 on a time-sharing basis. For example, the subsystem may determine a time schedule on using the OFE 130 according to different security levels and/or priority levels pertained to the first and the second communication networks 300, 400. The time schedule may be determined by further taking predetermined traffic loads on using the first network 300 and the second network 400 into account.

FIG. 2 shows a block diagram of another basic setup of the subsystem 100. The first and the second communication interfaces comprise respectively a first baseband module 111 and a second baseband module 121. The first baseband module 111 is configured to carry out bidirectional data conversion between baseband signals of the first network 300 and baseband signals suitable for the OFE 130, and the second baseband module 121 is configured to carry out bidirectional data conversion between baseband signals of the second network 400 and baseband signals suitable for the OFE 130. The baseband signals suitable for the OFE 130 may be modulated according to Orthogonal Frequency-Division Multiplexing (OFDM) or On-Off Keying (OOK). For example, if the first and the second networks are Ethernet, the first communication interface 110 and the second communication interface 120 use dedicated baseband chipsets, such as the first baseband module 111 and the second baseband module 121 respectively, to convert Ethernet data into baseband signals suitable for optical communication, such as with OFDM or OOK modulation.

The first and the second communication interfaces may respectively further comprise a first analog front end (AFE) module 112 and a second AFE module 122. The first AFE module 112 is configured to carry out bidirectional conversion between digital signals to/from the first baseband module 111 and analog signals to the combiner 140 or from the splitter 150. The second AFE module 122 is configured to carry out bidirectional conversion between digital signals to/from the second baseband module 121 and analog signals to the combiner 140 or from the splitter 150. For example, the first AFE module 112 is configured to convert digital signals received from the first baseband module 111 to analog signals to send to the combiner 140, and to convert analog signals received from the splitter 150 to digital signals to send to the first baseband module 111. Similarly, the second AFE module 122 is configured to convert digital signals received from the second baseband module 121 to analog signals to send to the combiner 140, and to convert analog signals received from the splitter 150 to digital signals to send to the second baseband module 121.

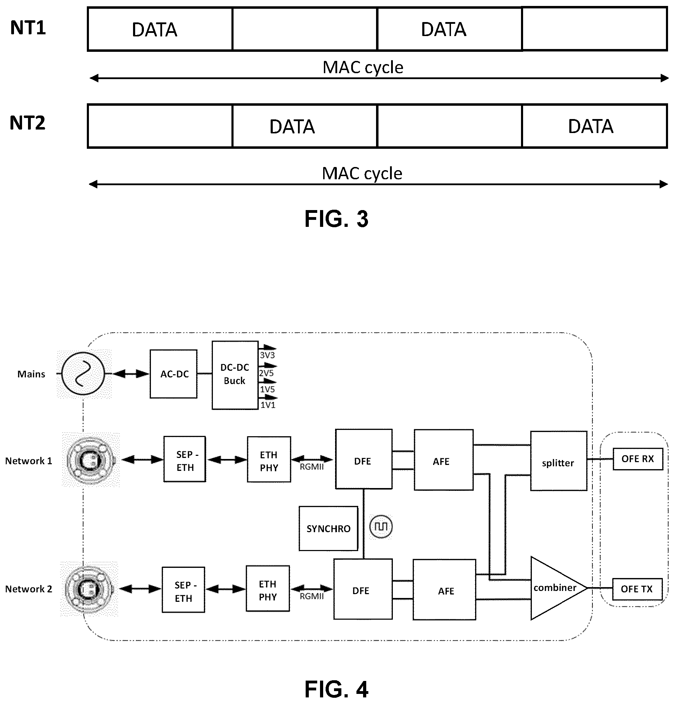

FIG. 3 illustrates time scheduling of two networks sharing one OFE 130 in the subsystem 100. Beneficially, some baseband modules used for optical wireless communication have controllable time slots. For example, in a system with time division multiple access (TDMA), one medium access control (MAC) frame/cycle is divided into multiple time slots. By synchronizing the baseband modules of the more than one network interfaces, it is possible to select the emission from either the first baseband module or the second baseband module. Thus, the two network interfaces 110,120 can share the single OFE 130 without interfering each other.

FIG. 4 demonstrates an example of implementing the subsystem 100. In this example, the first and the second network are according to Smart Ethernet Protection (SEP) protocol, which is a ring network protocol specially used for the Ethernet link layer. Each network interface comprises a SEP to Ethernet adapter. Each network interface further comprises its dedicated baseband chipset to convert Ethernet data into modulated/ demodulated signals with the appropriate type of modulation (i.e., OFDM, OOK).

Because time sharing is applied for emitting/ receiving between both networks, one single Optical Front-End module can be used. In this example, the time schedule between the two communication interfaces in using the shared OFE 130 may be realized by employing a reference clock SYNCHRO to synchronize the baseband modules, digital front end (DFE), of the first and the second communication interfaces.

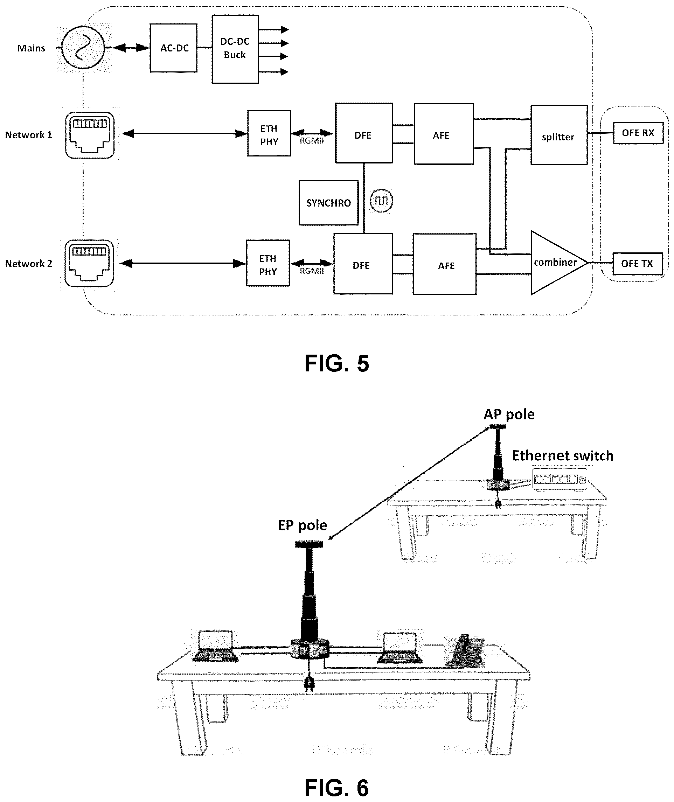

FIG. 5 demonstrates another example of implementing the subsystem 100. In this example, the first and the second networks are both according to an Ethernet protocol. Note that the two networks and/or a further network may be according to a same or different communication protocols. For example, it is also possible that one of the external networks is a wired network, and another one of the external networks is a wireless network. A wired network may be an Ethernet. The wireless network may be based on a millimeter wave communication system, or a 5G cellular network. The different networks are related to either different domains, different priorities, or different security levels.

By sharing the same OFE among the multiple network interfaces in the subsystem, interference handling can be solved within the subsystem, such as scheduling the multiple baseband modules accordingly. The different priorities and/or different security levels can also be reflected in the scheduling of using the single OFE. For example, the network with higher priority and/or security level may use the OFE with a longer period of time to satisfy a strict latency requirement, while another network with lower priority and/or security level may occupy the OFE with a shorter period of time. The scheduling may also be determined by taking a further factor into account, such as a typical traffic load on a certain network.

The scheduling may be implemented as a fixed time schedule by synchronizing the two or more baseband modules with each corresponding to an individual network. In another option, the subsystem 100 may further comprise a controller to dynamically control the two or more network interfaces in using the single OFE module 130 according to one or more other factors, such as real-time traffic information or a user request. In a further example, it may also be possible to determine the scheduling by taking the presence of certain end devices into account. For example, if the end devices are only allowed to access the low security level network but not the high security level network, it is also more efficient to allocate more time to the low security level network for using the single OFE module 130. In another example, if there are only one or more end devices in connection with the high security level network, it is also efficient to temporarily put the low security level network interface on hold.

Depending on use cases, the OFE 130 may have either narrow beam or wide beam. For example, in a use case of deploying LiFi in a military tent, it is preferable to share the same OFE between several different networks and still presenting a large coverage with OFE having +/45-degree beam angle. For vehicle to vehicle communication where the distance between two vehicles may be long (e.g., hundreds of meters) and may require switching between multiple networks (e.g., voice & data), narrow beams may be more beneficial (e.g., 1-degree beam angle). In this case, to reach long distances, bulky optics (e.g., Fresnel lens) might be required, and sharing one OFE (one optics) among multiple networks is a real advantage.

The subsystem may be comprised in a single housing. For example, the subsystem may be deployed as a standalone optical access point on the ceiling. The subsystem may also be deployed as a part of another electronic device, such as a luminaire, in a single housing.

In a further example, the subsystem may be implemented as a LiFi access point (AP) pole, as shown in FIG. 6. The pole comprises multiple basebands for different networks, which are all connected to one single OFE, and the OFE emits and receives data coming from multiple networks (such as in a TDMA-based approach). Similarly, the subsystem may also be used to construct a LiFi end point (EP) pole composing multiple basebands and all connected to one single OFE. A horizontal OWC link may be established between the LiFi AP pole and the LiFi EP pole, such that devices connected to the LiFi EP pole may access to different networks. The OFE may be deployed at one end of a pole, such as the top of the pole.

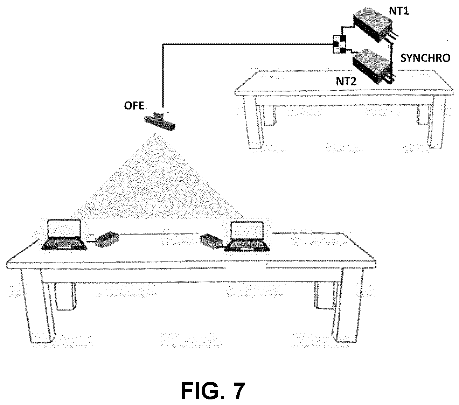

Alternatively, the subsystem may also be implemented in a distributed manner, as shown in FIG. 7. For example, the two network interfaces may be comprised in a single or two separate housings and placed close to Ethernet switches. The outputs of the two network interfaces are connected to a single OFE that emits and receives data coming from multiple networks. A reference clock SYNCHRO may be used to synchronize the two network interfaces for sharing the single OFE in a time division multiple access approach. LiFi End Points (EP) may have dedicated Service Set Identifier (SSID) for connection to a specific network and be placed under the coverage area of the OFE will be connected to their respective networks. Only one cable and one OFE are required to transfer data of multiple networks in a given area.

## Claims

1. A subsystem (100) configured to be part of an optical access point for connecting an end device (200) to a first network (300) or a second network (400) via optical wireless communication; wherein the first network (300) and the second network (400) are of different security and/or priority levels, the subsystem (100) comprising:
- a first communication interface (110) configured to provide connection to the first network (300);
- a second communication interface (120) configured to provide connection to the second network (400);
- an optical front end, OFE (130), comprising a light source (131) configured to emit optical data to the end device (200) and a light detector (132) configured to receive optical data from the end device (200) for optical wireless communication with the end device (200);
- a combiner (140), connected between the light source (131) and the first and the second communication interfaces, configured to combine analog signals received from both the first and the second communication interfaces and to provide the combined analog signals to the light source (131) for transmission; and
- a splitter (150), connected between the light detector (132) and the first and the second communication interfaces, configured to split analog signals received from the light detector (132) and to provide the analog signals to either the first communication interface (110) or the second communication interface (120).

2. The subsystem (100) of claim 1, the subsystem (100) configured to use the OFE (130) for connecting to either the first network (300) or the second network (400) on a time-sharing basis.

3. The subsystem (100) of claim 2, the subsystem (100) configured to set a time schedule on using the OFE (130) for connecting to either the first network (300) or the second network (400) according to the different security levels and/or priority levels.

4. The subsystem (100) of claim 3, the subsystem (100) configured to set the time schedule by further taking predetermined traffic loads on using the first network (300) and the second network (400) into account.

5. The subsystem (100) of any one of previous claims, wherein the first and the second communication interfaces respectively comprise a first baseband module (111) and a second baseband module (121), wherein the first baseband module (111) is configured to carry out bidirectional data conversion between baseband signals of the first network (300) and baseband signals suitable for the OFE (130), and the second baseband module (121) is configured to carry out bidirectional data conversion between baseband signals of the second network (400) and baseband signals suitable for the OFE (130).

6. The subsystem (100) of claim 5, wherein the baseband signals suitable for the OFE (130) are modulated according to Orthogonal Frequency-Division Multiplexing, OFDM, or On-Off Keying, OOK.

7. The subsystem (100) of claims 5 or 6, wherein the subsystem (100) further comprises a reference clock configured to synchronize the baseband modules of the first and the second communication interfaces.

8. The subsystem (100) of any one of previous claims 5 - 7, wherein the first and the second communication interfaces respectively further comprise a first analog front end, AFE, module (112) and a second AFE module (122);
wherein the first AFE module (112) is configured to carry out bidirectional conversion between digital signals to/from the first baseband module (111) and analog signals to the combiner (140) or from the splitter (150), and the second AFE module (122) is configured to carry out bidirectional conversion between digital signals to/from the second baseband module (121) and analog signals to the combiner (140) or from the splitter (150).

9. The subsystem (100) of any one of previous claims, wherein at least one out of the first network (300) and the second network (400) is a wired network.

10. The subsystem (100) of any one of previous claims, wherein the subsystem (100) is comprised in a single housing.

11. The subsystem (100) of claim 10, wherein the subsystem (100) is assembled in a pole, and the OFE (130) is placed on one side of the pole.

12. The subsystem (100) of any one of previous claims, wherein the optical wireless communication is according to a Li-Fi standard.

## Patentansprüche

1. Subsystem (100), das konfiguriert ist, um Teil eines optischen Zugangspunkts zum Verbinden einer Endvorrichtung (200) mit einem ersten Netzwerk (300) oder einem zweiten Netzwerk (400) über optische drahtlose Kommunikation zu sein; wobei das erste Netzwerk (300) und das zweite Netzwerk (400) sich in ihrer Sicherheits- und/oder Prioritätsstufe unterscheiden, das Subsystem (100) umfassend:
- eine erste Kommunikationsschnittstelle (110), die konfiguriert ist, um eine Verbindung zu dem ersten Netzwerk (300) bereitzustellen;
- eine zweite Kommunikationsschnittstelle (120), die konfiguriert ist, um die Verbindung zu dem zweiten Netzwerk (400) bereitzustellen;
- ein optisches Front-End, OFE (130), umfassend eine Lichtquelle (131), die konfiguriert ist, um optische Daten an die Endvorrichtung (200) zu emittieren, und einen Lichtdetektor (132), der konfiguriert ist, um optische Daten von der Endvorrichtung (200) für die optische drahtlose Kommunikation mit der Endvorrichtung (200) zu empfangen;
- einen Kombinierer (140), der zwischen der Lichtquelle (131) und der ersten und der zweiten Kommunikationsschnittstelle verbunden ist, der konfiguriert ist, um von sowohl der ersten als auch der zweiten Kommunikationsschnittstelle empfangene analoge Signale zu kombinieren und die kombinierten analogen Signale an die Lichtquelle (131) für eine Übertragung bereitzustellen; und
- einen Splitter (150), der zwischen dem Lichtdetektor (132) und der ersten und der zweiten Kommunikationsschnittstelle verbunden ist, der konfiguriert ist, um von dem Lichtdetektor (132) empfangene analoge Signale zu splitten und die analogen Signale entweder an die erste Kommunikationsschnittstelle (110) oder die zweite Kommunikationsschnittstelle (120) bereitzustellen.

2. Subsystem (100) nach Anspruch 1, wobei das Subsystem (100) konfiguriert ist, um das OFE (130) zum Verbinden mit entweder dem ersten Netzwerk (300) oder dem zweiten Netzwerk (400) auf einer Time-Sharing-Basis zu verwenden.

3. Subsystem (100) nach Anspruch 2, wobei das Subsystem (100) konfiguriert ist, um einen Zeitplan zum Verwenden des OFE (130) zum Verbinden mit entweder dem ersten Netzwerk (300) oder dem zweiten Netzwerk (400) gemäß den unterschiedlichen Sicherheitsstufen und/oder Prioritätsstufen festzulegen.

4. Subsystem (100) nach Anspruch 3, wobei das Subsystem (100) konfiguriert ist, um den Zeitplan durch ferneres Berücksichtigen vorbestimmter Verkehrslasten zum Verwenden des ersten Netzwerks (300) und des zweiten Netzwerks (400) festzulegen.

5. Subsystem (100) nach einem der vorstehenden Ansprüche, wobei die erste beziehungsweise die zweite Kommunikationsschnittstelle ein erstes Basisbandmodul (111) und ein zweites Basisbandmodul (121) umfassen, wobei das erste Basisbandmodul (111) konfiguriert ist, um eine bidirektionale Datenumwandlung zwischen Basisbandsignalen des ersten Netzwerks (300) und für das OFE (130) geeigneten Basisbandsignalen auszuführen, und das zweite Basisbandmodul (121) konfiguriert ist, um die bidirektionale Datenumwandlung zwischen Basisbandsignalen des zweiten Netzwerks (400) und für das OFE (130) geeigneten Basisbandsignalen auszuführen.

6. Subsystem (100) nach Anspruch 5, wobei die für das OFE (130) geeigneten Basisbandsignale gemäß einem orthogonalen Frequenzmultiplexverfahren, OFDM, oder einer Ein-Aus-Tastung, OOK, moduliert sind.

7. Subsystem (100) nach Anspruch 5 oder 6, wobei das Subsystem (100) ferner einen Referenztaktgeber umfasst, der konfiguriert ist, um die Basisbandmodule der ersten und der zweiten Kommunikationsschnittstelle zu synchronisieren.

8. Subsystem (100) nach einem der vorstehenden Ansprüche 5 bis 7, wobei die erste beziehungsweise die zweite Kommunikationsschnittstelle ferner ein erstes analoges Front-End-Modul, AFE-Modul (112), und ein zweites AFE-Modul (122) umfassen;
wobei das erste AFE-Modul (112) konfiguriert ist, um die bidirektionale Umwandlung zwischen digitalen Signalen an das/von dem erste(n) Basisbandmodul (111) und analogen Signalen an den Kombinierer (140) oder von dem Splitter (150) auszuführen, und das zweite AFE-Modul (122) konfiguriert ist, um die bidirektionale Umwandlung zwischen digitalen Signalen an das/von dem zweite(n) Basisbandmodul (121) und analogen Signalen an den Kombinierer (140) oder von dem Splitter (150) auszuführen.

9. Subsystem (100) nach einem der vorstehenden Ansprüche, wobei mindestens eines von dem ersten Netzwerk (300) und dem zweiten Netzwerk (400) ein drahtgebundenes Netzwerk ist.

10. Subsystem (100) nach einem der vorstehenden Ansprüche, wobei das Subsystem (100) in einem einzigen Gehäuse umfasst ist.

11. Subsystem (100) nach Anspruch 10, wobei das Subsystem (100) in einem Mast montiert ist und das OFE (130) an einer Seite des Mastes angeordnet ist.

12. Subsystem (100) nach einem der vorstehenden Ansprüche, wobei die optische drahtlose Kommunikation gemäß einem Li-Fi-Standard erfolgt.

## Revendications

1. Sous-système (100) configuré pour faire partie d'un point d'accès optique pour connecter un dispositif d'extrémité (200) à un premier réseau (300) ou à un second réseau (400) par communication optique sans fil ; dans lequel le premier réseau (300) et le second réseau (400) sont de niveaux de sécurité et/ou de priorité différents, le sous-système (100) comprenant :
- une première interface de communication (110) configurée pour fournir une connexion au premier réseau (300) ;
- une seconde interface de communication (120) configurée pour fournir une connexion au second réseau (400) ;
- un frontal optique, OFE (130), comprenant une source de lumière (131) configurée pour émettre des données optiques vers le dispositif terminal (200) et un détecteur de lumière (132) configuré pour recevoir des données optiques à partir du dispositif terminal (200) pour une communication optique sans fil avec le dispositif terminal (200) ;
- un combinateur (140), connecté entre la source de lumière (131) et les première et seconde interfaces de communication, configuré pour combiner des signaux analogiques reçus à la fois à partir de la première et de la seconde interface de communication et pour fournir les signaux analogiques combinés à la source de lumière (131) pour transmission ; et
- un séparateur (150), connecté entre le détecteur de lumière (132) et les première et seconde interfaces de communication, configuré pour séparer des signaux analogiques reçus à partir du détecteur de lumière (132) et pour fournir les signaux analogiques soit à la première interface de communication (110), soit à la seconde interface de communication (120).

2. Sous-système (100) selon la revendication 1, le sous-système (100) étant configuré pour utiliser l'OFE (130) pour se connecter soit au premier réseau (300), soit au second réseau (400) selon un mode de partage du temps.

3. Sous-système (100) selon la revendication 2, le sous-système (100) étant configuré pour définir une planification temporelle d'utilisation de l'OFE (130) pour la connexion soit au premier réseau (300) soit au second réseau (400) en fonction des différents niveaux de sécurité et/ou niveaux de priorité.

4. Sous-système (100) selon la revendication 3, le sous-système (100) étant configuré pour définir la planification temporelle en tenant également compte de charges de trafic prédéterminées liées à l'utilisation du premier réseau (300) et du second réseau (400).

5. Sous-système (100) selon l'une quelconque des revendications précédentes, dans lequel les première et seconde interfaces de communication comprennent respectivement un premier module de bande de base (111) et un second module de bande de base (121), dans lequel le premier module de bande de base (111) est configuré pour effectuer une conversion de données bidirectionnelle entre des signaux de bande de base du premier réseau (300) et des signaux de bande de base appropriés pour l'OFE (130), et le second module de bande de base (121) est configuré pour effectuer une conversion de données bidirectionnelle entre des signaux de bande de base du second réseau (400) et des signaux de bande de base appropriés pour l'OFE (130).

6. Sous-système (100) selon la revendication 5, dans lequel les signaux de bande de base appropriés pour l'OFE (130) sont modulés selon un multiplexage par répartition orthogonale de la fréquence, OFDM, ou une modulation par tout ou rien, OOK.

7. Sous-système (100) selon la revendication 5 ou 6, dans lequel le sous-système (100) comprend en outre une horloge de référence configurée pour synchroniser les modules de bande de base des première et seconde interfaces de communication.

8. Sous-système (100) selon l'une quelconque des revendications précédentes 5 à 7, dans lequel les première et seconde interfaces de communication comprennent en outre respectivement un premier module frontal analogique, AFE, (112) et un second module AFE (122) ;
dans lequel le premier module AFE (112) est configuré pour effectuer une conversion bidirectionnelle entre des signaux numériques à destination ou en provenance du premier module de bande de base (111) et des signaux analogiques à destination du combinateur (140) ou en provenance du séparateur (150), et le second module AFE (122) est configuré pour effectuer une conversion bidirectionnelle entre des signaux numériques à destination ou en provenance du second module de bande de base (121) et des signaux analogiques à destination du combinateur (140) ou en provenance du séparateur (150).

9. Sous-système (100) selon l'une quelconque des revendications précédentes, dans lequel au moins l'un parmi le premier réseau (300) et le second réseau (400) est un réseau filaire.

10. Sous-système (100) selon l'une quelconque des revendications précédentes, dans lequel le sous-système (100) est logé dans un seul boîtier.

11. Sous-système (100) selon la revendication 10, dans lequel le sous-système (100) est assemblé dans un poteau, et l'OFE (130) est placé sur un côté du poteau.

12. Sous-système (100) selon l'une quelconque des revendications précédentes, dans lequel la communication optique sans fil est conforme à une norme Li-Fi.
